# EUROPÄISCHE PATENTANMELDUNG

(11) **EP 2 957 968 A1**
(43) Veröffentlichungstag der Anmeldung: **23.12.2015**
(21) Anmeldenummer: 15164193.3
(22) Anmeldetag: 20.04.2015
(51) Int. Cl.: G05B 19/042

(54) **KONFIGURIERBARE INTEGRIERTE SCHALTUNG, STEUERGERÄT UND VERFAHREN ZUM KONFIGURIEREN**

(30) Priorität: 11.06.2014 DE 102014211107
(71) Anmelder: ROBERT BOSCH GMBH, 70442 Stuttgart (DE)
(72) Erfinder: Hermann, Carsten, 72762 Reutlingen (DE)

(57) **Zusammenfassung**

Es wird eine konfigurierbare integrierte Schaltung (5) mit einem über einen externen Widerstand (4) konfigurierbaren Konfigurationsanschluss (6) beschrieben, wobei eine geschaltete Stromquelle (10) intern an den Konfigurationsanschluss (6) angeschlossen ist und wobei ein Komparator (16, 17) zum Vergleich einer durch einen Strom der Stromquelle (10) hervorgerufenen Spannung an dem Konfigurationsanschluss (6) und einer Referenzspannung (18, 19) vorgesehen ist.

Ferner wird ein Verfahren zum Konfigurieren einer konfigurierbaren integrierten Schaltung (5) vorgeschlagen, wobei ein Widerstand (4) aus einer Gruppe von Widerständen ausgewählt und an einen Konfigurationsanschluss (6) der konfigurierbaren integrierten Schaltung (5) angeschlossen wird, wobei ein Strom einer geschalteten Stromquelle (10) der konfigurierbaren integrierten Schaltung (5) dem Konfigurationsanschluss (6) zugeführt wird, wobei der Wert des Stroms aus einer Gruppe von Stromwerten ausgewählt und durchgeschaltet wird, bis ein Komparator (16, 17) basierend auf der Spannung an dem Konfigurationsanschluss (6) eine Konfiguration detektiert.

## Beschreibung

Die vorliegende Erfindung betrifft eine konfigurierbare integrierte Schaltung, ein Steuergerät und ein Verfahren zum Konfigurieren einer konfigurierbaren integrierten Schaltung. Die vorliegende Erfindung betrifft insbesondere eine konfigurierbare integrierte Schaltung mit hoher funktionaler Sicherheit, welche die Norm ISO 26262 erfüllt.

### Stand der Technik

Während des Hochfahrens oder Startens von integrierten Schaltungen wie zum Beispiel anwenderspezifischen integrierten Schaltungen (ASIC) kann die Notwendigkeit bestehen, eine bestimmte Konfiguration einzustellen, bevor andere Kommunikationspfade eine solche Konfiguration ermöglichen. Dies kann beispielsweise in einem Steuergerät eines Kraftfahrzeugs der Fall sein, wobei dann ein Kommunikationspfad beispielsweise durch eine serielle Peripherie-Schnittstelle (SPI, Serial Peripheral Interface) eines Mikrocontrollers des Steuergeräts realisiert sein kann.

So kann es beispielsweise erforderlich sein, die Betriebsspannung für den Mikrocontroller festzulegen, bevor diese eingeschaltet und dem Mikrocontroller zur Verfügung gestellt wird. Klassisch wird diese Festlegung über Konfigurationspins der integrierten Schaltung vorgenommen, die auf der Leiterplatte fest verdrahtet werden. So kann eine integrierte Schaltung als Versorgungsbaustein für verschiedene Mikrocontrollertypen mit unterschiedlichen Versorgungsspannungen eingesetzt werden. Über ein oder mehrere Konfigurationspins der integrierten Schaltung wird die Spannung je nach Mikrocontrollertyp im Steuergerät festgelegt, mit der die integrierte Schaltung dann hochläuft, um den Mikrocontroller des Steuergerätes mit der konfigurierten Spannung zu versorgen.

In klassischen Entwürfen wird ein solcher Konfigurationspin oder Konfigurationsanschluss entweder auf Masse oder auf eine im Hochlauf bereits verfügbare Spannung, zum Beispiel eine für die integrierte Schaltung intern erzeugte Vorspannung, angeschlossen. Andererseits kann die Unterscheidung oder Konfiguration dadurch erfolgen, dass die Konfigurationspins entweder auf Masse gelegt oder offen gelassen werden, wobei eine interne Stromquelle dann den Konfigurationspin auf die interne Versorgungsspannung der integrierten Schaltung hochzieht. Während des Hochfahrens werden dann die Pegel der Konfigurationspins abgefragt, und die entsprechende Konfiguration, wie zum Beispiel das Einstellen einer bestimmten Versorgungsspannung oder das Schalten einer bestimmten Endstufe, kann dann im Hochlauf erfolgen, noch bevor andere Kommunikationsmöglichkeiten gegeben sind.

In Bezug auf die funktionale Sicherheit hat diese Vorgehensweise Nachteile, denn es kann nicht unterschieden werden, ob ein Konfigurationspin gewollt auf einem Low- oder High-Pegel liegt oder ob dieser Pegel durch einen Fehler, zum Beispiel einen Kurzschluss zu einem benachbarten Pin oder nach Masse, durch einen Bondabriss oder eine unterbrochene Leiterbahn auf der Leiterplatte, entstanden ist. Es könnte so eine unbeabsichtigte Konfiguration eingestellt werden, die zu einer Fehlfunktion führen könnte, und die im schlimmsten Fall sogar unbemerkt bliebe oder das Steuergerät schädigen könnte.

Darüber hinaus werden unter Umständen viele Anschlüsse beziehungsweise Konfigurationspins der integrierten Schaltung verbraucht, die nun nicht mehr für andere Funktionen zur Verfügung stehen. Sollen bei einem Versorgungs-ASIC beispielsweise acht verschiedene Versorgungsspannungen für einen Mikrocontroller einstellbar sein, werden bei zweiwertiger Logik drei Konfigurationspins benötigt. In klassischen Entwürfen, bei denen zur Reduktion der nötigen Konfigurationspins eine mehrwertige Logik durch einen externen Spannungsteiler und einen im ASIC integrierten einfachen Analog-Digital-Wandler realisiert wird, ist der Störabstand entsprechend gering, und der Aufwand für den Analog-Digital-Wandler ist relativ hoch.

### Offenbarung der Erfindung

Erfindungsgemäß wird eine konfigurierbare integrierte Schaltung mit einem über einen externen Widerstand konfigurierbaren Konfigurationsanschluss zur Verfügung gestellt, wobei vorgesehen ist, dass eine geschaltete Stromquelle intern an den Konfigurationsanschluss angeschlossen ist und dass ein Komparator zum Vergleich einer durch einen Strom der Stromquelle hervorgerufenen Spannung an dem Konfigurationsanschluss und einer Referenzspannung vorgesehen ist. Damit kann die über den jeweilig ausgewählten Widerstand abfallende Spannung detektiert und somit eine bestimmte Konfiguration erkannt werden. Auch ist ein durch einen Bondabriss oder eine unterbrochene Leiterbahn offener Konfigurationsanschluss oder ein durch Kurzschlüsse zu benachbarten Anschlüssen oder gegen Masse oder ein beliebiges anderes Potential kurzgeschlossener Konfigurationsanschluss erkennbar, wodurch die funktionale Sicherheit erhöht wird.

Die erfindungsgemäße konfigurierbare integrierte Schaltung hat den Vorteil, dass der Hardwareaufwand reduziert werden kann, weil eine mehrwertige Logik mit hohem Störabstand und geringem schaltungstechnischem Aufwand vorgeschlagen wird.

In einer besonderen Ausführungsform ist vorgesehen, dass zwei Komparatoren mit unterschiedlicher Referenzspannung vorgesehen sind. Dadurch kann die funktionale Sicherheit weiter erhöht werden, da auch nicht plausible Widerstandswerte, die zum Beispiel durch hochohmige Kurzschlüsse zu benachbarten Anschlüssen oder nach Masse oder einem anderen beliebigen Potential entstehen, erkannt werden können. Dies ist insbesondere für sicherheitsrelevante Systeme vorteilhaft.

Auch ist es möglich, dass der Konfigurationsanschluss einen inneren Kontakt, einen äußeren Kontakt und einen zwischen den beiden Kontakten angeordneten Bonddraht aufweist, wobei die Stromquelle und der Komparator an den inneren Kontakt angeschlossen sind und wobei der externe Widerstand an den äußeren Kontakt anschließbar ist. Diese Konfiguration ist insbesondere bei ASICs, das heißt anwenderspezifischen integrierten Schaltungen, anzutreffen, für welche die Erfindung aufgrund ihrer Flexibilität besonders vorteilhaft einsetzbar ist.

Ferner ist möglich, dass die Anzahl der Gruppe der anschließbaren Widerstände n beträgt und die Anzahl der einstellbaren Stromstärken der Stromquelle n+1 beträgt. Es hat sich gezeigt, dass diese Kombination bei ausgewählten und aufeinander abgestimmten Widerstandswerten und Stromstärken beziehungsweise Amplituden auf einfache Art und Weise eine eindeutige Erkennung des angeschlossenen Widerstands ermöglicht.

Gemäß einer bevorzugten Ausführungsform der Erfindung ist ein Speicher zum Speichern eines Konfigurationswertes basierend auf dem erkannten Wert des Widerstandes vorgesehen. So kann die einmal vorzugsweise bei einem Starten oder Hochfahren der Schaltung erkannte Konfiguration für spätere Verwendungen gespeichert werden, sodass ein schnellerer Zugriff gegeben ist.

Zwischen dem Konfigurationsanschluss und dem Komparator kann ein Tiefpass angeordnet sein. Dieser Tiefpass wirkt als EMV-Filter und erhöht somit die elektromagnetische Verträglichkeit.

Erfindungsgemäß wird ferner ein Steuergerät für ein Kraftfahrzeug mit einer Leiterplatte zur Verfügung gestellt, wobei auf der Leiterplatte eine konfigurierbare integrierte Schaltung wie zuvor beschrieben und ein Widerstand vorgesehen sind, und wobei der Widerstand und der Konfigurationsanschluss der konfigurierbaren integrierten Schaltung an einem Knoten der Leiterplatte angeschlossen sind. Es gelten die gleichen Vorteile und Modifikationen wie zuvor beschrieben.

Gemäß einer bevorzugten Ausführungsform der Erfindung ist vorgesehen, dass der Widerstand aus einer Gruppe von Widerständen ausgewählt ist und dass die Werte der Widerstände der Gruppe und die einstellbaren Stromstärken der Stromquelle derart abgestimmt sind, dass der Wert des Widerstandes mittels des Komparators eindeutig bestimmbar ist. Es hat sich gezeigt, dass eine Kombination von ausgewählten und aufeinander abgestimmten Widerstandswerten und Stromstärken beziehungsweise Amplituden auf einfache Art und Weise eine Konfiguration durch Auswahl eines bestimmten Widerstands beziehungsweise Widerstandswerts aus der Gruppe ermöglicht. So fallen die Werte der Widerstände, zum Beispiel der E-Reihen E12, E24, E48 usw., exponentiell ab und die Werte der Stromstärken steigen exponentiell an. Weiterhin wird durch die entsprechenden Stromstärken eine eindeutige Erkennung des angeschlossenen Widerstands ermöglicht.

Auch ist es möglich, dass die Gruppe der Widerstände drei Widerstände mit unterschiedlichen Widerstandswerten aufweist und dass die Stromquelle vier einstellbare Stromstärken umfasst. Dadurch wird die Kodierung von drei Konfigurationen an einem Pin beziehungsweise Konfigurationsanschluss erreicht. Je nach Anwendung sind weitere Anzahlen von Konfigurationen wie zum Beispiel sechs oder acht oder noch mehr möglich.

Das erfindungsgemäße Verfahren zum Konfigurieren einer konfigurierbaren integrierten Schaltung sieht vor, dass ein Widerstand aus einer Gruppe von Widerständen ausgewählt und an einen Konfigurationsanschluss der konfigurierbaren integrierten Schaltung angeschlossen wird, dass ein Strom einer geschalteten Stromquelle der konfigurierbaren integrierten Schaltung dem Konfigurationsanschluss zugeführt wird, dass der Wert des Stroms aus einer Gruppe von Stromwerten ausgewählt und durchgeschaltet wird, bis ein Komparator basierend auf der Spannung an dem Konfigurationsanschluss eine Konfiguration detektiert. Es gelten die gleichen Vorteile und Modifikationen wie zuvor beschrieben.

### Zeichnungen

Ausführungsbeispiele der Erfindung werden anhand der Zeichnung und der nachfolgenden Beschreibung näher erläutert. Es zeigt:

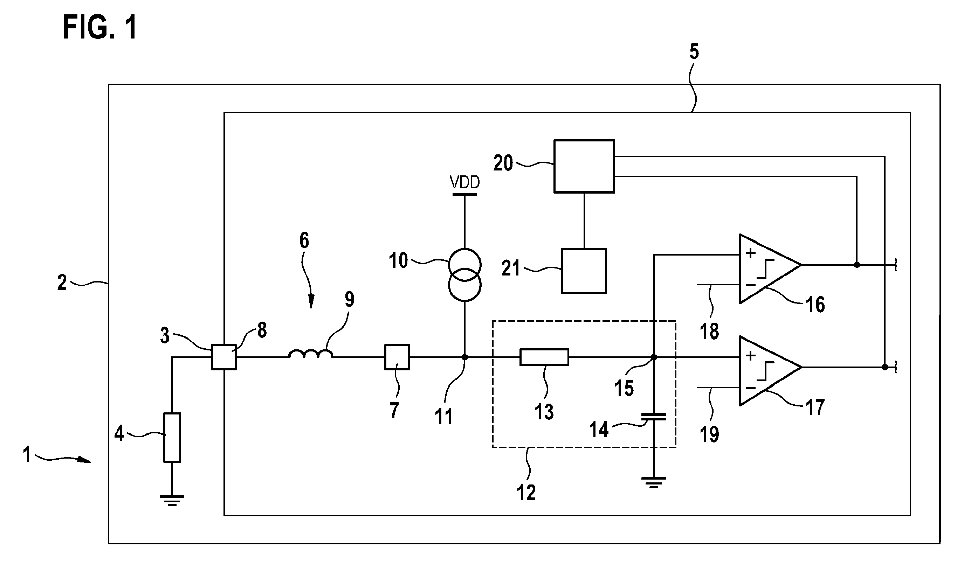

Figur 1 ein Schaltbild eines Steuergeräts mit einer konfigurierbaren integrierten Schaltung.

### Ausführungsformen der Erfindung

In Figur 1 ist schematisch ein Steuergerät 1 dargestellt, wie es beispielsweise in einem Kraftfahrzeug wie einem PKW, LKW, Motorrad o. ä. verwendet werden kann. Das Steuergerät 1 hat eine Platine oder Leiterplatte 2, auf der beispielhaft ein Knoten 3 angeordnet ist. Der Knoten 3 kann einen oder mehrere miteinander verbundene Kontaktierungspunkte oder Kontaktlöcher aufweisen. Über einen Widerstand 4 ist der Knoten 3 auf der Leiterplatte 2 mit Masse verbunden.

Auf der Leiterplatte 2 ist des Weiteren eine konfigurierbare integrierte Schaltung 5, beispielsweise in Form einer anwenderspezifischen integrierten Schaltung (ASIC) angeordnet. Ein Konfigurationsanschluss 6 der konfigurierbaren integrierten Schaltung 5 ist ebenfalls an den Knoten 3 der Leiterplatte 2 angeschlossen.

Der Konfigurationsanschluss 6 besteht hier aus einem inneren Kontakt 7, der beispielsweise als Pad innerhalb der Schaltung 5 ausgebildet ist, einem äußeren Kontakt 8, der beispielsweise als Pin ausgebildet ist, und einem Bonddraht 9, der zwischen dem inneren Kontakt 7 und dem äußeren Kontakt 8 angeordnet ist.

An den inneren Kontakt 7 beziehungsweise an den Konfigurationsanschluss 6 ist eine geschaltete Stromquelle 10 über einen Knoten 11 der integrierten Schaltung 5 angeschlossen. An ihrem anderen Ende liegt die Stromquelle 10 an der Versorgungsspannung der konfigurierbaren integrierten Schaltung 5. An den Knoten 11 ist weiter ein als EMV-Filter dienender Tiefpass 12 angeschlossen. Der Tiefpass 12 hat einen Längswiderstand 13 und einen gegen Masse geschalteten Kondensator 14. Der Widerstand 13 und der Kondensator 14 sind an einen Knoten 15 angeschlossen.

Ebenfalls an den Knoten 15 angeschlossen sind die positiven Eingänge eines ersten Komparators 16 und eines zweiten Komparators 17. An einem negativen Eingang des ersten Komparators 16 liegt eine erste Referenzspannung 18 an, während an einem negativen Eingang des zweiten Komparators 17 eine zweite Referenzspannung 19 anliegt. Die Ausgänge der beiden Komparatoren 16 und 17 sind mit einer Steuereinheit oder einem Mikrocontroller 20 der konfigurierbaren integrierten Schaltung 5 verbunden. Die Steuerung 20 steuert direkt oder indirekt die geschaltete Stromquelle 10. Die Steuerung 20 ist mit einem Speicher 21 verbunden, in dem Konfigurationen oder ein oder mehrere Konfigurationswerte der konfigurierbaren integrierten Schaltung 5 abgespeichert werden können.

Im Folgenden wird nun die Funktion der konfigurierbaren integrierten Schaltung 5 beziehungsweise die Konfiguration dieser Schaltung 5 erläutert. Die interne geschaltete Stromquelle 10 erzeugt einen Strom, der über den Knoten 11, den Konfigurationsanschluss 6 und durch den externen Widerstand 4 läuft. Über diesem Widerstand 4 entsteht so ein Spannungsabfall, der über den Konfigurationsanschluss 6 mithilfe der beiden Komparatoren 16 und 17 ausgewertet werden kann.

Durch verschiedene Werte des externen Widerstandes 4 können im Zusammenspiel mit der geschalteten internen Stromquelle 10 vorhandene Konfigurationen sequenziell abgefragt werden. Die so während des Hochlaufes oder Startens der konfigurierbaren integrierten Schaltung 5 beziehungsweise des Steuergeräts 1 eingelesene Konfiguration wird im Speicher 21 gespeichert und vorzugsweise nach dem Hochlaufen gesperrt.

Die in Figur 1 dargestellte Steuerung 20 sowie der Speicher 21 der konfigurierbaren integrierten Schaltung 5 können in den Digitalteil einer Schaltung wie eines ASICs integriert werden. Es wird darauf hingewiesen, dass von der konfigurierbaren integrierten Schaltung 5 und von dem Steuergerät 1 lediglich Ausschnitte dargestellt sind, die für die Erläuterung der Erfindung wesentlich sind.

Für die konfigurierbare integrierte Schaltung 5 kann beispielsweise ein Halbleiterprozess mit einer Versorgungsspannung von VDD = 3,3 V und eine interne geschaltete Stromquelle 10 mit diskreten Werten von 5 µA, 15 µA, 45 µA und 150 µA verwendet werden. Mit einem externen Widerstand 4, der aus einer Gruppe von Widerständen mit Widerstandswerten von 100 kΩ, 33 kΩ und 10 kΩ ausgewählt ist, können in diesem Beispiel drei verschiedene Konfigurationen eingestellt werden.

Mithilfe der beiden Komparatoren 16 und 17 mit Schaltschwellen bei einer ersten Referenzspannung 18 von 1 V und einer zweiten Referenzspannung 19 von 2 V kann durch sequenzielles Einstellen der diskreten Stromwerte erkannt werden, welcher Widerstand aus der Widerstandsgruppe an den Konfigurationsanschluss 6 angeschlossen ist. Dabei kann das Fehlen eines Widerstandes, eine unterbrochene Leiterbahn, ein Bondabriss und ein Kurzschluss zu einem benachbarten Pin oder nach Masse erkannt werden. Auch nicht plausible Widerstandswerte können in gewissen Grenzen erkannt werden.

Dazu wird in einem ersten Schritt die interne Stromquelle 10 auf einen Wert von 5 µA eingestellt. Im Normalfall ist der Spannungsabfall über den in diesem Beispiel möglichen externen Widerstand 4 mit einem Wert von 100 kΩ, 33 kΩ oder 10 kΩ immer kleiner als 1 V, sodass beide Komparatoren 16 und 17 an ihren Ausgängen einen Low-Pegel anzeigen. Bei einem fehlenden Widerstand, einer unterbrochenen Leiterbahn oder einem Bondabriss würde die interne Stromquelle 10 den Konfigurationsanschluss 6 an die interne Spannungsversorgung (hier 3,3 V) ziehen, und beide Komparatoren 16 und 17 würden dies durch einen High-Pegel anzeigen.

In weiteren Schritten wird die geschaltete Stromquelle 10 auf die nächsten Werte des Stroms geschaltet. Im Normalfall gibt es je nach externem Widerstand 4 genau einen Strom aus der Anzahl der einstellbaren Stromstärken, bei dem der Komparator 16 einen High-Pegel und der Komparator 17 einen Low-Pegel führt. In diesem Beispiel ist dies bei einem Strom von 15 µA für einen Widerstand mit 100 kΩ, für einen Strom mit 45 µA für einen Widerstand mit 33 kΩ und für den Strom mit 150 µA für einen Widerstand mit 10 kΩ der Fall. Bei einem Kurzschluss zu einem benachbarten spannungsführenden Pin oder nach Masse würden sich die Logikpegel der beiden Komparatoren 16 und 17 nicht erwartungsgemäß verhalten.

Nachdem die Steuerung 20 bei bekanntem Strom von dem ersten Komparator 16 einen High-Pegel und von dem zweiten Komparator 17 einen Low-Pegel empfangen hat, ist der externe Widerstand 4 beziehungsweise die Konfiguration für die konfigurierbare integrierte Schaltung 5 bekannt. Die Bestimmung der Konfiguration aus der eingestellten Stromstärke und den beiden Ausgängen der beiden Komparatoren 16 und 17 kann beispielsweise über Logikgatter oder mittels einer Look-Up-Table realisiert sein. Nachdem die Konfiguration beziehungsweise der Konfigurationswert ermittelt ist, wird dieser in dem Speicher 21 abgelegt. Anschließend wird dieser Konfigurationswert in den nicht dargestellten Schaltungsteilen der integrierten Schaltung 5 verwendet und/oder weiterverarbeitet.

Auf den zweiten Komparator 17 kann verzichtet werden, da eine eindeutige Zuordnung auch mit einem Komparator 16 möglich ist. Der Strom der geschalteten Stromquelle 10 wird dann schrittweise von 5µA auf 15µA, 45µA und 150 µA erhöht, bis der Komparator 16 einen High-Pegel an seinem Ausgang führt. So kann auf den Wert des angeschlossenen Widerstandes 4 und die damit ausgewählte Konfiguration geschlossen werden. Bei entsprechend enger Wahl der beiden Komparatorschaltschwellen und einer Betrachtung der Störeinflüsse, der Toleranzen der Referenzspannungen 18, 19, der Komparator-Offsets, der Genauigkeit der internen Stromquelle 10 und der Genauigkeit der externen Widerstände 4 kann aber mit zwei Komparatoren 16, 17 ein höheres Maß an Sicherheit erzielt werden, weil dann in gewissen Grenzen auch nicht plausible Widerstandswerte erkennbar sind. So würde zum Beispiel ein Widerstand von 20kΩ als fehlerhaft detektiert werden, weil keiner der Ströme mit den Werten 5µA, 15µA, 45µA und 150 µA dazu führt, das von dem ersten Komparator 16 ein High-Pegel und von dem zweiten Komparator 17 ein Low-Pegel ausgegeben wird.

Ebenso ist es möglich, eine größere Anzahl von Konfigurationen vorzusehen. Beispielsweise kann die Widerstandsreihe E48 zur Erzeugung von neun Konfigurationen verwendet werden. So können die Widerstandswerte 100kΩ, 56,2kΩ, 31,6kΩ 17,8kΩ, 10kΩ, 5,62kΩ, 3,16kΩ, 1,78kΩ und 1kΩ mit den Stromstärken 15µA, 26,7µA, 47,4µA, 84,4µA, 150µA, 267µA, 474µA, 844µA und 1500µA kombiniert werden, um neun Konfigurationen an dem einen Konfigurationsanschluss 6 der konfigurierbaren integrierten Schaltung 5 einstellen zu können. Die Stromstärken können durch eine geschaltete Stromquelle realisiert sein.

Auch bei acht oder mehr Stufen ist hier mithilfe der geschalteten Stromquelle 10 und gegebenenfalls in Kombination mit dem EMV-Filter im Gegensatz zu Entwürfen, bei denen eine mehrwertige Logik durch einen externen Spannungsteiler und einen im ASIC integrierten einfachen Analog-Digital-Wandler realisiert wird, ein deutlich höherer Störabstand realisierbar. Der Störabstand wird hier durch die Anzahl der Stufen nicht reduziert und entspricht in etwa dem einer klassischen dreiwertigen Logik. Mit einem einzigen Konfigurationsanschluss 6 oder Konfigurationspin sind so mehr als zwei Zustände oder Konfigurationen wählbar. Die Anzahl der möglichen Stufen hängt von der Wahl der Komparatorschaltschwelle beziehungsweise der Komparatorschaltschwellen, der beziehungsweise des Komparator-Offsets, den Toleranzen der Referenzspannung, der Toleranz der internen geschalteten Stromquelle 10 und/oder der Toleranz des externen Widerstandes 4 ab. Die Anzahl der benötigten Konfigurationsanschlüsse, die zur Konfiguration verwendet werden müssen, kann so reduziert werden.

## Patentansprüche

1. Konfigurierbare integrierte Schaltung (5) mit einem über einen externen Widerstand (4) konfigurierbaren Konfigurationsanschluss (6), **dadurch gekennzeichnet, dass**
eine geschaltete Stromquelle (10) intern an den Konfigurationsanschluss (6) angeschlossen ist und dass ein Komparator (16, 17) zum Vergleich einer durch einen Strom der Stromquelle (10) hervorgerufenen Spannung an dem Konfigurationsanschluss (6) und einer Referenzspannung (18, 19) vorgesehen ist.

2. Konfigurierbare integrierte Schaltung nach Anspruch 1, wobei zwei Komparatoren (16, 17) mit unterschiedlicher Referenzspannung (18, 19) vorgesehen sind.

3. Konfigurierbare integrierte Schaltung nach Anspruch 1 oder 2, wobei der Konfigurationsanschluss (6) einen inneren Kontakt (7), einen äußeren Kontakt (8) und einen zwischen den beiden Kontakten (7, 8) angeordneten Bonddraht (9) aufweist, wobei die Stromquelle (10) und der Komparator (16, 17) an den inneren Kontakt (7) angeschlossen sind und wobei der externe Widerstand (4) an den äußeren Kontakt (8) anschließbar ist.

4. Konfigurierbare integrierte Schaltung nach einem der Ansprüche 1 bis 3, wobei die Anzahl der Gruppe der anschließbaren Widerstände (4) n beträgt und die Anzahl der einstellbaren Stromstärken der Stromquelle (10) n+1 beträgt.

5. Konfigurierbare integrierte Schaltung nach einem der Ansprüche 1 bis 4, wobei ein Speicher (21) zum Speichern eines Konfigurationswertes basierend auf dem erkannten Wert des Widerstandes (4) vorgesehen ist.

6. Konfigurierbare integrierte Schaltung nach einem der Ansprüche 1 bis 5, wobei zwischen dem Konfigurationsanschluss (6) und dem Komparator (16, 17) ein Tiefpass (12) angeordnet ist.

7. Steuergerät für ein Kraftfahrzeug mit einer Leiterplatte (2), wobei auf der Leiterplatte (2) eine konfigurierbare integrierte Schaltung (5) nach einem der Ansprüche 1 bis 6 und ein Widerstand (4) vorgesehen sind und wobei der Widerstand (4) und der Konfigurationsanschluss (6) der konfigurierbaren integrierten Schaltung (5) an einem Knoten (3) der Leiterplatte (2) angeschlossen sind.

8. Steuergerät nach Anspruch 7, wobei der Widerstand (4) aus einer Gruppe von Widerständen ausgewählt ist und wobei die Werte der Widerstände der Gruppe und die einstellbaren Stromstärken der Stromquelle (10) derart abgestimmt sind, dass der Wert des Widerstandes (4) mittels des Komparators (16, 17) eindeutig bestimmbar ist.

9. Steuergerät nach Anspruch 7 oder 8, wobei die Gruppe der Widerstände drei Widerstände (4) mit unterschiedlichen Widerstandswerten aufweist und wobei die Stromquelle (10) vier einstellbare Stromstärken umfasst.

10. Verfahren zum Konfigurieren einer konfigurierbaren integrierten Schaltung (5), wobei ein Widerstand (4) aus einer Gruppe von Widerständen ausgewählt und an einen Konfigurationsanschluss (6) der konfigurierbaren integrierten Schaltung (5) angeschlossen wird, wobei ein Strom einer geschalteten Stromquelle (10) der konfigurierbaren integrierten Schaltung (5) dem Konfigurationsanschluss (6) zugeführt wird, wobei der Wert des Stroms aus einer Gruppe von Stromwerten ausgewählt und durchgeschaltet wird, bis ein Komparator (16, 17) basierend auf der Spannung an dem Konfigurationsanschluss (6) eine Konfiguration detektiert.
